# EUROPÄISCHE PATENTSCHRIFT

(11) **EP 0 599 957 B1**
(45) Veröffentlichungstag und Bekanntmachung des Hinweises auf die Patenterteilung: **13.11.1996**
(21) Anmeldenummer: 92918105.5
(22) Anmeldetag: 19.08.1992
(51) Int. Cl.: B03C 5/00, B03C 5/02

(54) **VERFAHREN ZUR KONTINUIERLICHEN TRENNUNG VON GEMISCHEN MIKROSKOPISCH KLEINER, DIELEKTRISCHER TEILCHEN UND VORRICHTUNG ZUR DURCHFÜHRUNG DES VERFAHRENS**
PROCESS FOR THE CONTINUOUS SEPARATION OF MIXTURES OF MICROSCOPICALLY SMALL DIELECTRIC PARTICLES AND DEVICE FOR IMPLEMENTING THE PROCESS
PROCEDE ET DISPOSITIF DE SEPARATION EN CONTINU DE MELANGES DE PARTICULES DIELECTRIQUES MICROSCOPIQUES

(30) Priorität: 19.08.1991 DE 4127405
(43) Veröffentlichungstag der Anmeldung: 08.06.1994
(60) Teilanmeldung: 96103459.2
(73) Patentinhaber: FRAUNHOFER-GESELLSCHAFT ZUR FÖRDERUNG DER ANGEWANDTEN FORSCHUNG E.V., 80636 München (DE)
(72) Erfinder: BENECKE, Wolfgang, D-1000 Berlin 30 (DE); WAGNER, Bernd, D-1000 Berlin 38 (DE); HAGEDORN, Rolf, D-1090 Berlin (DE); FUHR, Günter, D-1113 Berlin (DE); MÜLLER, Torsten, D-1190 Berlin (DE)
(74) Vertreter: Münich, Wilhelm, Dr.
(86) Internationale Anmeldenummer: DE9200694
(87) Internationale Veröffentlichungsnummer: WO9303850

(56) Entgegenhaltungen:
- WO-A-91/11262
- DE-A- 4 034 697
- US-A- 1 498 911
- IEEE INDUSTRY APPLICATIONS SOCIETY ANNUAL MEETING 1986,CONFERENCE RECORD; DENVER US Seiten 1350 - 1354 R.J.ADAMSON ET AL
- IEEE INDUSTRY APPLICATIONS SOCIETY ANNUAL MEETING 1985,CONFERENCE RECORD, 1985,
- TORONTO CANADA Seiten 1418 - 1423 S.MASUDA

## Beschreibung

### Technisches Gebiet

Die Erfindung bezieht sich auf ein Verfahren zur Trennung von Gemischen mikroskopisch kleiner, in einer Flüssigkeit oder einem Gel suspendierter, dielektrischer Teilchen sowie eine Vorrichtung zur Durchführung des Verfahrens.

### Stand der Technik

Mit einem solchen Trennverfahren sollen Gemische mikroskopisch kleiner Teilchen, wie biologische Zellen, Zellorganellen, Biomoleküle sowie anorganische, dielektrische Teilchen isoliert und für Untersuchungen oder technische Anwendungen aufbereitet werden.

Die Trennung bestimmter Teilchensorten aus Teilchengemischen ist beispielsweise in der Medizin, der Nahrungsmitteltechnologie, der Biologie, der Chemie und der Pharmazie erforderlich. Insbesondere wenn größere Mengen eines Gemisches getrennt werden sollen, ist es wünschenswert, ein kontinuierliches Trennverfahren einzusetzen.

Zur Trennung von Teilchengemischen sind verschiedene elektrokinetische Verfahren bekannt. Trennverfahren wie zum Beispiel die Gelelektrophorese, die Isotachophorese und die isoelektrische Fokussierung trennen Teilchengemische nach den unterschiedlichen Beweglichkeiten ihrer Bestandteile auf. Eine entscheidende Voraussetzung für eine solche Auftrennung besteht darin, daß durch geeignete Maßnahmen die in jedem Fall auftretenden Konvektionen auf einen unkritischen Wert reduziert werden, da die Beweglichkeit der Teilchen durch die Konvektion beeinflußt wird.

Die Reduzierung der Konvektion erfolgt entweder durch Kühlung oder durch die Verwendung konvektionsverhindernder Träger. Dabei sind Grenzen gesetzt, wenn relativ große Teilchen, wie biologische Zellen, zu trennen sind, oder wenn im kontinuierlichen Betrieb gearbeitet werden soll. Ein kontinuierlicher Betrieb kann deshalb nur durch aufwendige Kühltechniken oder durch komplizierte Stabilisierungstechniken, beispielsweise durch Nutzung von Zentrifugalkräften, erreicht werden.

Die dabei anfallenden Kosten und technologischen Probleme haben dazu geführt, daß kontinuierlich arbeitende Elektrophoreseverfahren bislang nur in beschränktem Umfang Verwendung finden.

Aus dem Aufsatz von M. Washizu, Electrostatic Manipulation of Biological Objects, erschienen in Journal of Electrostatics, Band 25, Nr. 1, Juni 1980, Amsterdam NL, Seiten 109 - 123 ist insbesondere auf den Seiten 119 und 120 ein Verfahren zum Trennen von Gemischen mikroskopisch kleiner, in einer Flüssigkeit oder einem Gel suspendierter dielektrischer Teilchen beschrieben. Die zu trennenden mikroskopisch kleinen Teilchen werden durch ein äußeres elektrisches Wechselfeld, das quer zur Bewegungsrichtung der Flüssigkeit bzw. des Gels angelegt ist, aufgetrennt. Das für die Auftrennung der Teilchen verwendete Hochfrequenzfeld wird jedoch nicht kontinuierlich betrieben, sondern es unterliegt einem charakteristischem Unterbrechungstakt, der konstruktionsbedingt ist und dafür sorgt, daß die einzelnen Zellen durch entsprechende Ausgänge die Trennvorrichtung verlassen können.

Desweiteren geht aus der WO-92/97657 ein Verfahren zur Handhabung mikroskopisch kleiner, dieelektischer Teilchen und Vorrichtung zur Durchführung des Verfahrens hervor, das sich im wesentlichen auf Elektrodenanordnungen beschränkt, mit denen eine geradlinige, konzentrierte Teilchenführung innerhalb eines elektrischen Wechselfeldes möglich ist. So können mit den darin beschriebenen Elektrodenanordnungen mikroskopisch kleine, dielektrische Teilchen durch enge Kanäle auf geradlinigen Bahnen geführt werden, um sie zu verschiedenen Zielorten berührungsfrei für Untersuchungen zu positionieren.

Aus der WO-91 11 262 sind Elektrodenvorrichtungen bekannt, mit Hilfe derer mikrobiologische Teilchen, vorzugsweise Zellen aus einer Vorzugsrichtung, die durch die Strömung einer Trägerflüssigkeit vorgegeben ist, abzulenken. Mit Hilfe der in diesem Dokument beschriebenen Elektrodenanordnungen werden bestimmte Zellreaktionen angeregt und unterstützt, indem bestimmte Partikel räumlich in Kontakt gebracht werden. Hierzu sind die Elektrodenstrukturen entsprechend zu wählen, so daß Partikelansammlungen in bestimmten Bereichen möglich sind. Auch geht aus dieser Druckschrift die Verwendung zweier unabhängig voneinander angesteuerter Elektrodenpaare hervor, wie sie in den Figuren 7 a und b dargestellt sind. Beide Elektrodenpaare werden derart betrieben, so daß sich an ihren Elektrodenoberflächen bestimmte Teilchenpartikel anlagern können. Sind die Oberflächen vollständig mit den Partikeln überzogen, muß der Trennprozeß unterbrochen werden. Ferner bedarf die Anordnung eines strömenden Fluids, in dem die zu untersuchenden Partikel geführt werden.

In allen bekannten Druckschriften wird das Problem der Konvektion auf die mikrobiologischen Zellen nicht behandelt. Ferner ist bislang keine kontinuierlich arbeitende Trennvorrichtung bekannt, mit deren Hilfe die störenden Konvektionseinflüsse auf die zu trennenden Partikel gelöst ist.

### Darstellung der Erfindung

Der Erfindung liegt die Aufgabe zugrunde, ein Verfahren zur Trennung von Gemischen mikroskopisch kleiner, suspendierter Teilchen anzugeben, das kontinuierlich arbeitet, eine hohe Trenngüte aufweist und kostengünstig realisiert werden kann, sowie eine Vorrichtung zur Durchführung des Verfahrens bereitszustellen. Insbesondere soll, ohne großen gerätetechnischem Aufwand, mit Hilfe des erfindungsgemäßen Verfahrens und der Vorrichtung eine weitgehende Vermeidung der störenden Konvektionserscheinungen innerhalb der zu trennenden Teilchengemische ermöglicht werden.

Diese Aufgabe wird erfindungsgemäß mit dem Verfahren nach dem Anspruch 1 gelöst. Weiter wird die Aufgabe durch die erfindungsgemäße Vorrichtung zur Durchführung des Verfahrens nach Anspruch 5 gelöst.

Die suspendierten Teilchen werden dabei durch dielektrophoretische Wander-Wechselfelder auf Führungsbahnen gezwungen.

Durch eine zusätzliche und gleichzeitig wirkende Kraft werden für bestimmte Teilchensorten die Kräfte, die die Teilchen auf die Führungsbahnen zwingen, kompensiert, so daß sie aus den Führungsbahnen ausgekoppelt und damit aus dem Gemisch getrennt werden.

Hierzu werden homogene Kraftfelder eingesetzt, die eine genügend starke senkrechte Komponente zur Führungsbahn aufweisen, bspw. ein elektrisches, magnetisches, optisches Feld oder einen Teilchenstrom, und durch Kompensierung der die bestimmten Teilchensorten auf die Führungsbahnen zwingenden Kräfte, aus der Führungsbahn auskoppeln.

Besonders einfach realisierbar ist ein elektrisches Feld, das zwischen zwei parallelen Elektroden durch Anlegen einer Spannung erzeugt wird, wobei sich die geführten Teilchen zwischen den Elektroden bewegen. Die Kraft kann aber auch durch ein Strömungsfeld, beispielsweise eine strömende Flüssigkeit, die sich mit senkrechter Komponente zu den geführten Teilchen bewegt, oder durch einen Teilchenstrom ausgeübt werden.

Weiterbildungen und Ausgestaltungen der Erfindung sind in den Unteransprüchen gekennzeichnet.

Das Führungsfeld ist nach Anspruch 1 ein in vorgebbare Richtungen wanderndes Hochfrequenzfeld. Die Frequenz des Führungsfeldes wird durch die dielektrischen Eigenschaften der zu trennenden Partikel bestimmt und liegt bei biologischen Partikeln typischerweise bei einigen 100 kHz, während die Amplitude bei 5V bis 40 V. Das hochfrequente Wanderfeld übt auf die suspendierten Teilchen Abstoßungs- bzw. Anziehungskräfte aus, die dadurch bedingt sind, daß die durch das elektrische Feld in den Teilchen induzierten Grenzflächenladungen hinter dem wandernden Feldvektor zurückbleiben. Die Bewegung der Teilchen erfolgt stark asynchron zum elektrischen Feld. Die Realisierung eines solchen Wanderfeldes ist in der nicht vorveröffentlichten deutschen Patentanmeldung DE P 40 34 697.8 ausführlich beschrieben.

Besonders flexibel ist ein Trennverfahren, das gemäß Anspruch 2 ein Führungsfeld mittels mehrerer Wechselfelder erzeugt, die sich hinsichtlich Frequenz und Phase unterscheiden. Hiermit kann die Kraft auf die geführten Teilchen sehr variabel gestaltet werden.

Die Auskopplung bestimmter Teilchensorten kann durch Variation des zusätzlichen Kraftfeldes oder durch Variation der durch das Führungsfeld auf die Teilchen wirkenden Kraft je nach gewünschter Selektierung eingestellt werden.

Bei einer bevorzugten Vorrichtung zur Durchführung des Verfahrens wird das Führungsfeld, das ein in eine vorgebbare Richtung wanderndes Hochfrequenzfeld ist, durch wenigstens eine Reihe von Elektroden erzeugt, die in Richtung des Wanderfeldes parallel zueinander auf einem Grundkörper angeordnet sind. Die Ausdehnung der Elektroden in Richtung des Wanderfeldes, sowie die Abstände der Elektroden entspricht in etwa der Größe der Teilchen im Gemisch und liegt für biologische Zellen typischerweise im Bereich weniger µm. Die Bewegung der Teilchen erfolgt über den Elektroden. Es können aber auch zwei Elektrodenreihen derart angeordnet werden, daß sie einen elektrodenfreien Kanal einschließen. Dann können die Teilchen in dem Kanal bewegt werden. Das Wanderfeld wird erzeugt, indem die Elektroden mit Hilfe einer elektronischen Schaltung in geeigneter Folge mit hochfrequenten Spannungen beaufschlagt werden.

Die Elektroden können entweder in einer oder mehreren Linien angeordnet sein, wodurch ein linearer Durchflußkanal für die Teilchen ausgebildet wird. Eine andere Möglichkeit ist, die die Elektroden entlang gekrümmter Bahnen anzuordnen, so daß auch gekrümmte Durchflußkanäle realisiert werden können. Durch die Anordnung der Elektroden kann die Breite des Kanals konstant gewählt werden, oder entlang der Kanalrichtung variieren. Durch verschiedene Anordnungen können sehr flexibel ausgestaltete Durchflußkanäle verwirklicht werden.

Eine besonders vorteilhafte Ausgestaltung der Erfindung ist in Anspruch 7 gekennzeichnet. Eine Durchströmkammer weist eine Einlaß- und eine Auslaßöffnung auf. Zwei Reihen von Elektroden schließen einen Durchströmkanal ein, der die beiden Öffnungen miteinander verbindet. Mit Hilfe der Elektrodenreihen wird ein hochfrequentes elektrisches Wanderfeld erzeugt. Die zusätzliche Kraft zur Trennung des Teilchengemisches wird durch Anlegen einer Spannung an zwei zusätzliche Elektroden erzeugt, die entlang des Kanals parallel zueinander angeordnet sind und wie ein Kondensator wirken.

Um einen Kontakt der aus dem Teilchenstrom ausgelenkten Teilchen mit diesen Elektroden zu verhindern, werden gemäß Anspruch 8 zwischen den Elektroden und den Elektrodenreihen Membranen angebracht, die den gesamten Kammerquerschnitt ausfüllen. Falls eine Auslenkung von Teilchen aus dem Gemisch nur in eine Richtung erfolgt, reicht eine Membran aus.

Die in Anspruch 9 beschriebene Vorrichtung ermöglicht den Strom eines Teilchengemisches in verschiedene Teilströme verschiedener Teilchensorten aufzuspalten. Hierzu weist der durch die Elektrodenreihen und Isolationsschichten gebildete Durchströmkanal eine Verzweigung auf. In dem Kanalbereich vor der Verzweigung werden die Teilchen mittels zusätzlicher Elektroden räumlich getrennt und durch das Wanderfeld in die verschiedenen Kanalzweige geführt. Diese Vorrichtung eignet sich besonders für eine Kaskadenanordnung, mit welcher eine besonders effektive Trennung der verschiedenen Teilchensorten erreicht wird.

Um zu verhindern, daß die aus dem Gemisch ausgekoppelten Teilchen die Strömung stören oder sich an den Elektroden ablagern, weisen die die Teilchenbahn begrenzenden Elemente nach Anspruch 10 passierbare Durchbrüche auf oder sind aus porösem Material gefertigt. Die ausgekoppelten Teilchen können durch die Öffnungen aus dem Strömungskanal entweichen. Besonders einfach lassen sich solche Öffnungen dadurch erzielen, daß als Grundkörper der Vorrichtung eine ultradünne Membrane verwendet wird, in die Durchbrüche geätzt werden.

Bei einer Vorrichtung gemäß Anspruch 11 weisen die Elektrodenflächen reliefartige Strukturen, vorzugsweise Längskanäle in Richtung der Strömung des Suspensionsmediums auf. Dadurch wird eine seitliche Ablenkung der nicht ausgekoppelten, strömenden Teilchen vermieden und die Strömung beruhigt. Durch die Beruhigung der Strömung wird eine Erhöhung der Trenngüte erreicht.

Eine Weiterbildung der Erfindung nach Anpruch 12 dient zur Beeinflussung der Laufeigenschaften der strömenden Teilchen. Die lokal unterschiedliche Dicken aufweisende Isolationsschicht auf den Elektroden läßt das elektrische Feld an verschiedenen Stellen unterschiedlich stark auf die Teilchen einwirken. Auf diese Weise kann der Teilchenstrom wirksam manipuliert werden, da an verschiedenen Stellen der Vorrichtung unterschiedliche Vorzugslaufbahnen für die Teilchen geschaffen werden können. Die mulden- und wellenförmige Struktur des Überzuges dient zur Beruhigung und flexiblen Führung des Teilchenstroms.

Nach Anspruch 13 besteht eine erfindungsgemäße Vorrichtung vorzugsweise aus Materialien, die in der Mikrostrukturtechnik und der Mikroelektronik verwendet werden und wird mit den dort üblichen Verfahren hergestellt. Der Grundkörper, auf den die Elektroden aufgebracht werden, besteht vorzugsweise aus Silizium, die Elektroden aus Gold.

Nach Anspruch 14 wird die Trennvorrichtung gemeinsam mit einer elektronischen Schaltung zur Ansteuerung der Elektroden und zur Auswertung der Teilchenbewegung auf einem gemeinsamen Grundkörper, vorzugsweise einem Siliziumwafer, integriert.

Die erfindungsgemäße Vorrichtung eignet sich gemäß Anspruch 15 gut für eine Kaskadierung. Durch Hintereinanderschalten mehrerer Trennvorrichtungen wird die Trenngüte wesentlich gesteigert. Gute Ergebnisse lassen sich erzielen, wenn ein ausgekoppelter Teilstrom auf die Ausgangsvorrichtung zurückgekoppelt wird und die Kaskade erneut durchläuft. In vielen Fällen wird eine sehr hohe Trenngüte bereits dann erreicht, wenn ein ausgekoppelter Teilstrom um eine oder zwei Trennstufen zurückgekoppelt wird.

Die mit der Erfindung erzielten Vorteile bestehen insbesondere darin, daß die vorgeschlagene Auftrennung des Gemisches im Gegensatz zu üblichen Trennverfahren einen Schwellwertcharakter aufweist. Die Trennung hängt demnach nur davon ab, ob eine bestimmte Teilchensorte ihre Führung verlassen kann oder nicht. Der die Trennung bestimmende Schwellwert kann durch die leicht zu beeinflussende Beziehung zwischen den dielektrischen Führungskräften und den auslenkenden Kraftkomponenten flexibel gewählt werden. Dadurch kann die auszukoppelnde Teilchensorte einfach bestimmt werden und gleichzeitig wird eine hohe Trenngüte errreicht.

Die durch die elektrophoretischen Kräfte vorgegebenen Bahnen können frei im Raum liegend gewählt werden, wodurch unter Verzicht auf Trägermaterialien leistungsfähige Durchflußsysteme zur Teilchentrennung konstruiert werden können.

Durch den einfachen Aufbau der Vorrichtung und die Eignung zur Systemintegration wird eine kostengünstige Trennvorrichtung bereitgestellt.

### Kurze Beschreibung der Zeichnungen

Ausführungsbeispiele der Erfindung sind in den Zeichnungen schematisch dargestellt und werden im folgenden ohne Beschränkung des allgemeinen Erfindungsgedankens näher beschrieben. Es zeigen:
Fig. 1 eine Vorrichtung zur kontinuierlichen Elektrophorese,
Fig. 2 eine planare Trennstrecke,
Fig. 3 eine Kaskadenanordnung.

### Beschreibung eines Ausführungsbeispiels

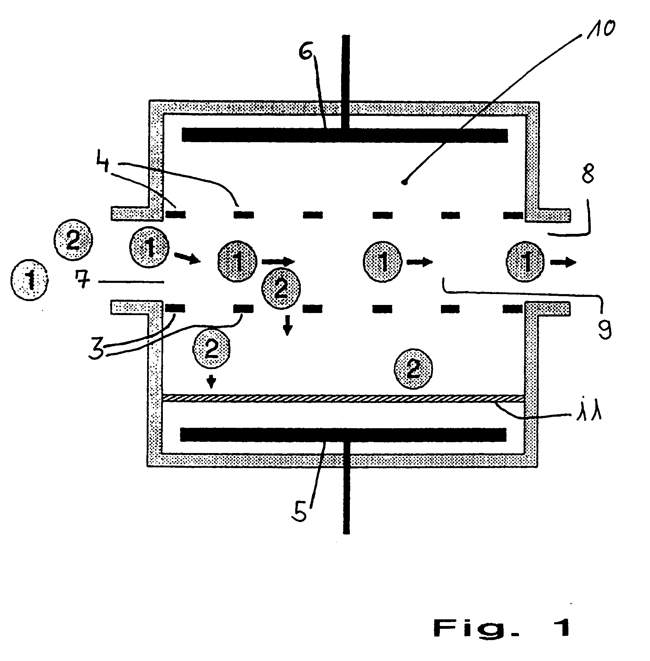

Die Fig. 1 zeigt eine Vorrichtung zur kontinuierlichen Auskopplung einer Teilchensorte aus dem Strom eines suspendierten Teilchengemisches. Eine Kammer 10 weist eine Einströmöffnung 7 und eine Ausströmöffnung 8 für einen Strom suspendierter Teilchen 1,2 auf. Zwei Reihen von Elektroden 3,4 schließen einen Strömungskanal 9 ein, der die beiden Öffnungen 7,8 verbindet. Durch Anlegen geeigneter hochfrequenter Wechselspannungen an die Elektroden 3,4 werden die Teilchen im Strömungskanal 9 durch die Kammer 10 bewegt. Mit Hilfe der Elektroden 5,6, die parallel zum Strömungskanal 9 angeordnet sind, wird ein elektrophoretisch wirksames Feld erzeugt.

Wenn beispielsweise die Teilchensorte 2 stärker mit Oberflächenladungen besetzt ist als die Teilchensorte 1, so kann durch die Wahl der Feldstärken erreicht werden, daß nur die Teilchensorte 2 aus ihrer Führungsbahn ausgelenkt wird. Die Teilchensorte 1 verläßt die Kammer 10 durch die Ausströmöffnung 8. Die Membrane 11 verhindert den Kontakt der ausgekoppelten Teilchen 2 mit der Elektrode 5.

Die Vorrichtung kann mit Hilfe der Verfahren der Mikrostrukturtechnik auf einem nicht abgebildeten Substrat aufgebaut werden. Die Ausdehung der Kammer 10 sowie der Elektroden 3 bis 6 senkrecht zur Zeichenebene kann durch galvanische Abformung bis zu einigen 100 µm betragen.

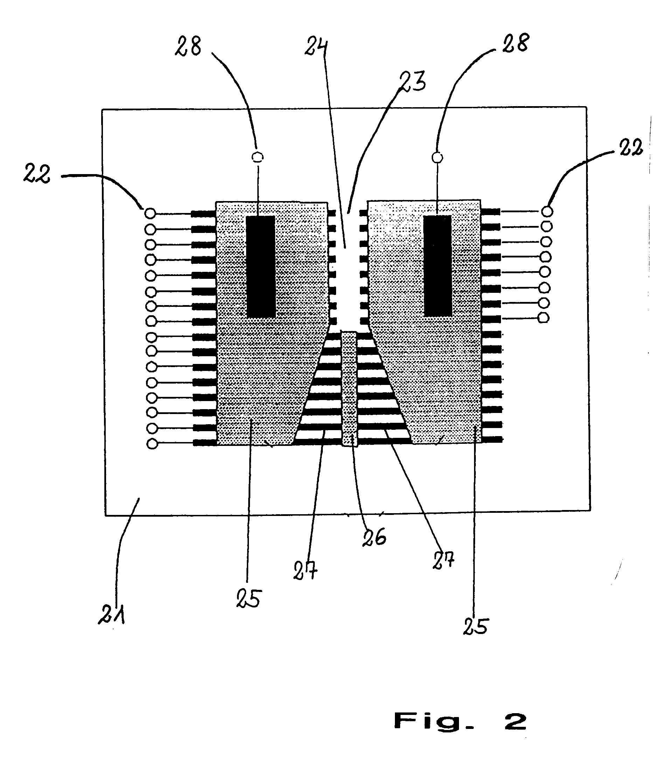

In Fig. 2 ist eine Vorrichtung zur Aufspaltung eines Stroms eines suspendierten Teilchengemisches in Ströme unterschiedlicher Teilchensorten dargestellt. Auf einem Grundkörper 21 sind 16 planare Elektroden 22 aufgebracht. Mit Hilfe dieser Elektroden wird ein hochfrequentes Wanderfeld erzeugt, das den Strom des suspendierten Teilchengemisches in eine Richtung senkrecht zu den Elektroden 22 bewegt.

Die ersten 8 der Elektroden 22 weisen eine zentrale Lücke 23 auf, wodurch ein in Richtung des Wanderfeldes verlaufender Kanal 24 ausgebildet wird. Durch zwei auf den Elektroden 22 aufgebrachte isolierende Schichten 25, die im Bereich der ersten 8 Elektroden 22 den Kanal 24 einschließen, wird dieser Kanal 24 in Richtung des Wanderfeldes hin derart verlängert, daß er im Bereich der durchgehenden Elektroden 22 eine zunehmende Kanalbreite aufweist. In diesem Bereich ist in der Kanalmitte eine zusätzliche isolierende Schicht 26 aufgebracht, die den sich verbreiternden Kanal 24 in zwei Teilkanäle 27 aufzweigt.

Mit Hilfe der beiden, auf den Isolierschichten 25 aufgebrachten Elektroden 28, wird ein elektrophoretisch wirksames Feld erzeugt, das zu einer räumlichen Trennung von unterschiedlichen Teilchensorten im Kanal 24 führt. Durch das Wanderfeld werden die getrennten Teilchensorten in die verschiedenen Teilkanäle weitergeführt.

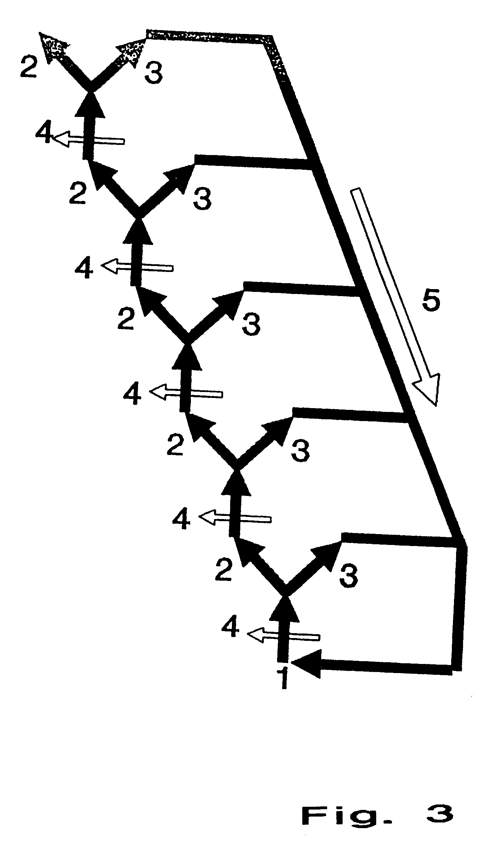

Die Fig. 3 zeigt eine kaskadenförmige Trennstrecke. Fünf Trennvorrichtungen (wie z.B. in Fig. 2 dargestellt sind hintereinander angeordnet. Die Pfeile 4 deuten an, daß in diesem Bereich durch Kombination der Dielektrophorese und einer zusätzlichen Kraft das Teilchengemisch 1 in zwei Fraktionen 2, 3 zerlegt wird. Die Fraktion der aus dem Gemisch ausgekoppelten Teilchensorte 2 durchläuft zur Reinigung von verbliebenen Teilchen des Gemisches weitere Trennstufen. Um die in der Fraktion 3 verbliebenen Teilchen der Sorte 2 zu gewinnen, wird jeweils die Teilchenfraktion 3 beispielsweise durch ein elektrisches, hochfrequentes Wanderfeld 5 zum Anfang der Kaskade oder jeweils eine Trennstufe zurückgeführt. Mit Hilfe der kaskadenförmigen Trennstrecke wird eine besonders hohe Trenngüte erreicht.

## Patentansprüche

1. Verfahren zur Trennung von Gemischen mikroskopisch kleiner, in einer Flüssigkeit oder einem Gel suspendierter, dielektrischer Teilchen,
dadurch **gekennzeichnet**, daß
die Teilchen durch hochfrequente, in mikroskopischer Entfernung Maxima und Minima aufweisende, elektrische, in vorgebbare Richtungen wandernde Wechselfelder als Führungsfeld auf Führungsbahnen gezwungen werden und daß bestimmte Teilchensorten durch wenigstens ein zusätzlich und gleichzeitig auf die Teilchen einwirkendes Kraftfeld mit einer zu den Führungsbahnen senkrechten Komponente in Form eines elektrischen, magnetischen, optischen Feldes oder eines Teilchenstroms, unter Kompensierung der die bestimmten Teilchensorten auf die Führungsbahnen zwingenden Kräfte, aus der Führungsbahn ausgekoppelt werden.

2. Verfahren nach Anspruch 1,
dadurch **gekennzeichnet**, daß das Führungsfeld mit mehreren Wechselfeldern erzeugbar ist, die sich hinsichtlich der Frequenz und Phase unterscheiden.

3. Verfahren nach Anspruch 1 oder 2,
dadurch **gekennzeichnet**, daß durch Änderung des zusätzlichen Kraftfeldes die auszukoppelnde Teilchensorte ausgewählt wird.

4. Verfahren nach Anspruch 1 oder 3,
dadurch **gekennzeichnet**, daß durch Änderung des Führungsfeldes die auszukoppelnde Teilchensorte ausgewählt wird.

5. Vorrichtung zur Durchführung des Verfahrens nach einem der Ansprüche 1 bis 4,
dadurch **gekennzeichnet**, daß wenigstens eine Reihe von Elektroden vorgesehen ist, die mit einer Spannung derart beaufschlagt werden, daß aufgrund des elektrischen Feldes der Elektroden auf die Teilchen ein hochfrequentes, elektrisches Wander-Kraftfeld wirkt und daß weitere Mittel vorgesehen sind, die ebenfalls eine auf die Teilchen wirkende Kraft erzeugen, die eine Komponente senkrecht zur Richtung des von den Elektroden erzeugten Kraftfeldes aufweist.

6. Vorrichtung nach Anspruch 5,
dadurch **gekennzeichnet**, daß zwei sich parallel gegenüberstehende Elektrodenreihen, die einen linearen oder gekrümmten Strömungskanal einschließen, vorgesehen sind.

7. Vorrichtung nach Anspruch 5,
dadurch **gekennzeichnet**, daß in einer Kammer (10) mit einer Einström- und einer Ausströmöffnung (7,8) zwei Reihen von Elektroden (3,4) angeordnet sind, die einen, die Öffnungen (7,8) miteinander verbindenden Strömungskanal (9) einschließen, und daß beidseitig außerhalb des Strömungskanals (9) entlang der Elektrodenreihen (3,4) jeweils eine zusätzliche parallel zueinander angeordnete Elektrode (5,6) angebracht ist.

8. Vorrichtung nach Anspruch 7,
dadurch **gekennzeichnet**, daß wenigstens zwischen einer Elektrodenreihe (3,4) und der entlang dieser Elektrodenreihe angeordneten zusätzlichen Elektrode (5,6) eine den Kammerquerschnitt ausfüllende Membran (11) angebracht ist.

9. Vorrichtung nach Anspruch 5,
**gekennzeichnet** durch die Kombination folgender Merkmale:
- auf einem Substrat (21) in Richtung des Wanderfeldes ist eine Reihe von quer zur Wanderfeldrichtung langgestreckter Elektroden (22) parallel hintereinander, mit gleichem Abstand angeordnet, von denen eine erste Anzahl benachbarter Elektroden (22) eine zentrale Lücke (23) aufweist, und einen in Richtung des Wanderfeldes verlaufenden Kanal (24) ausgebilden,
- eine zweite Anzahl benachbarter Elektroden (22) ist durchgängig ausgebildet,
- über den Elektroden (22) sind zwei isolierende Schichten (25) angebracht, die im Bereich der ersten Anzahl benachbarter Elektroden rechteckförmig ausgebildet sind, die Elektroden (22) weitgehend überdecken und den von diesen Elektroden ausgebildeten Kanal (24) einschließen und im Bereich der zweiten Anzahl von Elektroden derart trapezförmig ausgebildet sind, daß die Breite des von den Schichten eingeschlossenen Kanals (24) in Richtung des Wanderfeldes zunimmt,
- über der zweiten Anzahl von Elektroden ist in der Kanalmitte eine dritte, in Richtung des Wanderfeldes verlaufende, langgestreckte, isolierende Schicht (26) aufgebracht, die den Kanal (24) im Bereich seiner zunehmenden Breite in zwei Teilkanäle (27) aufzweigt, und
- auf den ersten beiden isolierenden Schichten (25) sind im Bereich der ersten Anzahl von Elektroden zusätzliche Elektroden (28) aufgebracht, die parallel zueinander und parallel zu dem von ihnen eingeschlossenen Kanal (24) verlaufen.

10. Vorrichtung nach einem der Ansprüche 5 bis 9,
dadurch **gekennzeichnet**, daß die die Teilchenbahnen begrenzenden Elemente passierbare Durchbrüche oder Poren aufweisen.

11. Vorrichtung nach einem der Ansprüche 5 bis 10,
dadurch **gekennzeichnet**, daß die Elektrodenoberflächen eine in mikroskopischer Dimension reliefartige Oberflächenstruktur derart aufweisen, daß in Richtung des Teilchenstroms Längskanäle ausgebildet sind.

12. Vorrichtung nach einem der Ansprüche 5 bis 11,
dadurch **gekennzeichnet**, daß die Elektrodenoberflächen mit isolierenden Materialien überzogen sind, und daß der Überzug Mulden, Wellen oder Bereiche unterschiedlicher Stärke aufweist.

13. Vorrichtung nach einem der Ansprüche 5 bis 12,
dadurch **gekennzeichnet**, daß der die Elektroden tragende Grundkörper aus halbleitendem Material, Glas oder Keramik besteht, daß die partiellen Vertiefungen, Erhöhungen oder Durchbrüche durch Ätzverfahren erzeugt sind, daß die Elektroden aus einem chemisch inerten Material bestehen, mit photolithographischen Methoden strukturiert und galvanisch abgeformt sind, und daß die dielektrischen Schichten auf den Elektroden aus SiO₂, Si₃N₄, Bariumtitanat oder TiO₂ bestehen.

14. Vorrichtung nach einem der Ansprüche 5 bis 13,
dadurch **gekennzeichnet**, daß das Multielektrodensystem zur Trennung der Teilchen zusammen mit einer elektronischen Schaltung zur Erzeugung der Felder und zur Auswertung von Teilchenbewegungen auf einem gemeinsamen Grundkörper integriert ist.

15. Vorrichtung nach einem der Ansprüche 5 bis 14,
dadurch **gekennzeichnet**, daß mehrere Vorrichtungen kaskadenförmig hintereinander angeordnet sind.

## Claims

1. Process for the separation of mixtures of microscopically small dielectric particles suspended in a liquid or a gel,
**characterized** in that
said particles are forced onto guideways by alternating electric fields traveling in predeterminable directions as guiding field, which present maximums and minimums in microscopic distances, and that specific species of particles are coupled out from said guideway by at least one additional field of force acting simultaneously on said particles, which presents a component orthogonal on said guideways and having the form of an electric, magnetic, optical field or of a flow of particles, with forces being compensated which force said specific particle species onto said guideways.

2. Process according to Claim 1,
**characterized** in that said guiding field may be generated with a plurality of alternating fields distinguished from each other in terms of frequency and phase.

3. Process according to Claim 1 or 2,
**characterized** in that the species of particles to be coupled out is selected by varying said additional field of force.

4. Process according to Claim 1 or 3,
**characterized** in that the species of particles to be coupled out is selected by varying said guiding field.

5. Device for implementing the process according to any of Claims 1 to 4,
**characterized** in that at least one row of electrodes is provided, to which a voltage is applied such that on account of the electric field of said electrodes a traveling electric high-frequency field of force acts upon said particles, and that further means are provided which generate equally a force acting upon said particles, which presents a component orthogonal on the direction of the field of force created by said electrodes.

6. Device according to Claim 4,
**characterized** in that two parallel opposite rows of electrodes are provided which enclose a linear or a curved flow passage.

7. Device according to Claim 5,
**characterized** in that two rows of electrodes (3, 4) are arranged in a chamber (10) having an inlet and an outlet opening (7, 8), which enclose a flow channel (9) interconnecting said openings (7, 8), and that a respective additional electrode (5, 6) disposed in parallel is provided on either side outside said flow channel (9) along said row of electrodes (3, 4).

8. Device according to Claim 7,
**characterized** in that a membrane (11) filling the cross-section of said chamber is provided at least between a row of electrodes (3, 4) and said additional electrode (5, 6) arranged along this row of electrodes.

9. Device according to Claim 5,
**characterized** by the combination of the following features:
- a row of electrodes (22), which are elongate and extend across the direction of said travelling field and are disposed in parallel tandem arrangement, is equidistantly provided on a substrate (21) along the direction of said traveling field, whereof a first number of adjacent electrodes (22) presents a central gap (23) and forms a channel (24) extending along the direction of said travelling field,
- a second number of adjacent electrodes (22) has a continuous configuration,
- two insulating layers (25) are disposed above said electrodes (22), which have a rectangular configuration in the region of said first number of adjacent electrodes, largely cover said electrodes (22) and enclose the channel (24) formed by these electrodes, and which, in the region of said second number of electrodes, present such a trapezoidal configuration that the width of the channel (24) formed by said layers increases along the direction of said traveling field,
- a third elongate insulating layer (26) is applied above said second number of electrodes in the middle of said channel, which layer extends in the direction of said traveling field and subdivides said channel (24) in the region of its increasing width into two channel branches (27), and
- in the region of said first number of electrodes additional electrodes (28) are applied on said first two insulating layers (25), which extend in parallel with each other and with the channel (24) enclosed by them.

10. Device according to any of Claims 5 to 9,
**characterized** in that the elements defining said particle paths present discontinuities or pores for passage.

11. Device according to any of Claims 5 to 10,
**characterized** in that the electrode surfaces present a relief-like surface structure of microscopic dimensions so as to form longitudinal passages along the direction of said flow of particles.

12. Device according to any of Claims 5 to 11,
**characterized** in that said electrode surfaces are coated with insulating materials, and that said coating presents troughs, corrugations or areas of different thickness.

13. Device according to any of Claims 5 to 12,
**characterized** in that the base body carrying said electrodes consists of a semiconductor material, glass or ceramic material, that said partial recesses, projections or discontinuities are produced by etching techniques, that said electrodes consist of a chemically inert material, are structured by photolithographic methods or galvanically shaped, and that said dielectric layers on said electrodes consist of SiO₂, Si₃N₄, barium titanate or TiO₂.

14. Device according to any of Claims 5 to 13,
**characterized** in that said multi-electrode system for separating the particles, together with an electronic circuit for generating said fields and for analyzing the movements of particles, is integrated on a joint base body.

15. Device according to any of Claims 5 to 14,
**characterized** in that several devices are provided in a cascade-type tandem arrangement.

## Revendications

1. Procédé à séparer des mélanges de particules diélectriques microscopiques en suspension dans un liquide ou un gel,
**caractérisé** en ce que
lesdites particules sont forcées sur des guides moyennant des champs électriques alternatifs, qui progressent en sens prédéterminables, en tant que champ de guidage, qui présentent des maximums et minimums à distances microscopiques, et en ce
qu'une espèce de particules particulière est sortie dudit guide par au moins un champ de force supplémentaire, agissant en même temps sur lesdites particules, qui a une composante orthogonale sur lesdits guides et qui présente la forme d'un champ électrique, magnétique, optique et d'un courant de particules, à compensation des forces qui forcent ladite espèce particulière de particules sur lesdits guides.

2. Procédé selon la revendication 1,
**caractérisé** en ce que ledit champ de guidage peut être engendré moyennant une pluralité de champs alternatifs, qui se distinguent l'un de l'autre par leur fréquence et leur phase.

3. Procédé selon la revendication 1 or 2,
**caractérisé** en ce qu'une espèce de particules à sortir est choisie en variant ledit champ de force supplémentaire.

4. Procédé selon la revendication 1 ou 3,
**caractérisé** en ce qu'une espèce de particules à sortir est choisie en variant ledit champ de guidage.

5. Dispositif à réaliser le procédé selon une quelconque des revendications 1 à 4,
**caractérisé** en ce qu'au moins une rangée d'électrodes est prévue, auxquelles une tension est appliquée de façon qu'en vertu du champ électrique desdites électrodes, un champ de force électrique haute fréquence à ondes progressives agit sur lesdites particules, et en ce que des moyens ultérieurs sont prévus, qui engendrent également une force qui agit sur lesdites particules, qui a un composant orthogonal à la direction du champ de force créé par lesdites électrodes.

6. Dispositif selon la revendication 4,
**caractérisé** en ce que deux rangées d'électrodes parallèles opposées sont prévues qui renferment un passage d'écoulement linéaire ou courbé.

7. Dispositif selon la revendication 5,
**caractérisé** en ce que deux rangées d'électrodes (3, 4) sont disposées dans une chambre (10) à une ouverture d'admission et une ouverture de sortie (7, 8), qui renferment une voie d'écoulement (9), qui relie lesdites ouvertures (7, 8) l'une à l'autre, et en ce qu'une électrode supplémentaire respective (5, 6), qui est arrangée en parallèle, est prévue des deux côtés, en dehors de ladite voie d'écoulement (9) le long de ladite rangée d'électrodes (3, 4).

8. Dispositif selon la revendication 7,
**caractérisé** en ce qu'une membrane (11), qui remplit la section transversale de ladite chambre, est prévue au moins entre une rangée d'électrodes (3, 4) et ladite électrode supplémentaire (5, 6) qui est disposée le long de cette rangée d'électrodes.

9. Dispositif selon la revendication 5,
**caractérisé** par la combinaison des mesures suivantes:
- une rangée d'électrodes (22), qui sont oblongues et s'étendent à travers le sens dudit champ à ondes progressives, et qui sont disposées en parallèle l'une derrière l'autre, est prévu à espacement équidistant, sur un substrat (21) selon la direction dudit champ à ondes progressives, dont un premier nombre d'électrodes voisines (22) présente une lacune centrale (23) et forme une voie (24), qui s'étend en sens dudit champ à ondes progressives,
- un deuxième nombre d'électrodes voisines (22) a une configuration continue,
- deux couches isolantes (25) sont disposées en dessus desdites électrodes (22), qui ont une configuration rectangulaire dans la zone dudit premier nombre d'électrodes voisines, qui recouvrent largement lesdites électrodes (22) et renferment ladite voie (24) formée par ces électrodes, et qui, dans la zone dudit deuxième nombre d'électrodes, ont une telle forme trapézoïdale que la largeur de la voie (24) formée par lesdites couches s'augmente selon la direction dudit champ à ondes progressives,
- une troisième couche isolante oblongue (26) est appliquée au dessus dudit deuxième nombre d'électrodes au milieu de ladite voie, laquelle couche s'étend en sens dudit champ à ondes progressives et divise ladite voie (24) dans la zone de sa largeur divergente dans deux branches de la voie (27), et
- des électrodes supplémentaires (28) sont appliquées sur lesdites deux premières couches isolantes (25), dans la zone dudit premier nombre d'électrodes, qui s'étendent en parallèle l'une relativement à l'autre et relativement à ladite voie (24) y renfermée.

10. Dispositif selon une quelconque des revendications 5 à 9,
**caractérisé** en ce que les éléments, qui définissent lesdites voies des particules, présentent des lacunes ou pores pour leur passage.

11. Dispositif selon une quelconque des revendications 5 à 10,
**caractérisé** en ce que les surfaces d'électrodes ont une structure superficielle en relief, aux dimensions microscopiques, pour former des passages longitudinaux selon la direction dudit courant de particules.

12. Dispositif selon une quelconque des revendications 5 à 11,
**caractérisé** en ce que lesdites surfaces d'électrodes sont recouvertes par des matériaux isolants, et en ce que ledit recouvrement a des structures en auge, des ondulations ou des zones à épaisseurs différentes.

13. Dispositif selon une quelconque des revendications 5 à 12,
**caractérisé** en ce que le corps de base, qui porte lesdites électrodes, est fait en un matériau semiconducteur, en verre ou céramique, que lesdits creux, bosses ou lacunes sont produits moyennant des techniques de morsure, que lesdites électrodes sont faites en un matériaux chimiquement inerte, sont structurées moyennant des méthodes de la photolithographie ou par moulage galvanique, et en ce que lesdites couches diélectriques sur lesdites électrodes sont faites en SiO₂, Si₃N₄, titanate de barium, ou en TiO₂.

14. Dispositif selon une quelconque des revendications 5 à 13,
**caractérisé** en ce ledit système à plusieurs électrodes pour la séparation des particules, ensemble avec un circuit électronique à engendrer lesdits champs et à analyser les mouvements des particules, est intégré sur un corps de base commun.

15. Dispositif selon une quelconque des revendications 5 à 14,
**caractérisé** en ce que plusieurs dispositifs sont disposés, l'un derrière l'autre, en un arrangement en cascade.
